# EUROPEAN PATENT APPLICATION

(11) **EP 2 290 295 A2**
(43) Date of publication of application: **02.03.2011**
(21) Application number: 10250451.1
(22) Date of filing: 11.03.2010
(51) Int. Cl.: F24D 3/14

(54) **Underfloor heating**

(30) Priority: 11.03.2009 GB 0904169
(71) Applicant: Ingram, Rex Anthony, Axminster, Devon EX13 7PU (GB)
(72) Inventor: Ingram, Rex Anthony, Axminster, Devon EX13 7PU (GB)
(74) Representative: Brown, Michael Stanley

(57) **Abstract**

An underfloor heating panel (10) has an upper surface formed with channels (11) to receive pipes (12). Some at least of the channels (11) have end portions that are wider or deeper than the main portions of the channels (11).

## Description

### Field of the Invention

This invention relates to underfloor heating and specifically to how this form of heating is incorporated into timber floors.

### Background to the Invention

Whereas once timber floor decks used to be constructed primarily using sawn timber planks, the floor decks in British buildings are now mostly constructed using much larger specially-manufactured timber floor panels such as particle board, oriented strand board or plywood, frequently with tongued and grooved edges and ends, generally as described and specified in BS EN312. Such panels can be made much wider than sawn timber planks whose width is necessarily restricted by the girth of the tree from which they are cut. By virtue of being resin-bonded, manufactured panels are stronger, much less likely to split and more moisture-resistant, they are more dimensionally stable and of much more consistent quality. They are also able to incorporate a proportion of recycled timber and are much quicker to install than planks. They are also less expensive than sawn timber planks. The floor decks they create are flatter and less prone to "squeak".

In the UK, such manufactured floor panels are generally sold in a standard size for general use, typically 2400mm x 600mm x 22mm thick, although for specific applications such as the creation of floors in boats or mobile homes sometimes panels of a larger format are used, 3000 mm x 1200mm or 3600 mm x 1200 mm, and plywood panels are available in 22mm, 24mm or 25mm thickness depending on their country of origin and whether they are formed using softwood or hardwood.

When they are installed, the edges of individual manufactured panels are glued together to form a complete floor deck.

It is an object of the present invention to provide new ways of incorporating underfloor heating into floor decks that are formed using these manufactured panels.

In order to understand the Invention, it is necessary to first understand
- how manufactured floor panels are used in different types of floor construction, and
- the various methods that are currently used to incorporate underfloor heating into such floor construction.

### 1. Different Forms of Timber Floor Construction

Joisted Floors: Standard floor panels can be set across the top of structural timber joists, formed either from sawn softwood sections or manufactured timber I-beams. This type of floor is referred to as a Joisted Floor. The joists are generally set at 400 mm centres if the joists are softwood sections but can be spaced up to 600 mm centres if the joists used are manufactured I-beams. A typical floor section is shown in Diagram A.

Battened or Floating Floors: Alternatively, such panels can be set across the top of thinner non-structural timber battens which are supported by a flat and level structural floor. This type of floor is referred to as a Battened or Floating Floor. A typical battened or floating floor section is shown in Diagram B.

Fully-Floating Floors: Alternatively, such panels can be laid on top of rigid insulation which itself is supported by a flat and level structural floor, where it is the self-weight of the panels that keeps the panels in position. This type of floor is referred to as a Fully Floating Floor and an example is shown in Diagram C.

Within joisted floors, acoustic insulation (and sometimes thermal insulation as well) is frequently fitted between the joists in order to reduce transmission of noise between the room spaces above and below the floor. This has the effect of reducing or eliminating the amount of space between the joists which is available for building services (plumbing, heating, electrical).

Where buildings are constructed using a timber-frame skeleton, timber floors are also frequently used to separate individual dwelling units, in which case any one of several different more complex forms of acoustic floor construction are used to support the standard floor panels. For separate reference, such constructions are described and specified in UK Building Regulations Robust Standard Details (RSD).

Whichever form of acoustic construction is used in a particular building, the structure supporting the timber floor deck is designed to allow the floor deck to move upwards and downwards in response to mechanical or acoustic shocks in order that the full affect of these shocks is not transferred into the joists or floor structure, and thence into the ceiling of the room space below. When incorporating underfloor heating into such floor constructions, this requirement for the floor deck to be able to move freely is often compromised by the form of underfloor heating used, which in turn can compromise the acoustic performance of the structure.

When an entire floor deck has been completed using manufactured panels, it is likely to be subject to a secondary installation process depending on the intended floor covering. This secondary process involves covering the panelled floor deck with 4 mm or 6 mm thick plywood sheets laid at right angles to the line of the standard panels, and it is customary for this layer of plywood to be glued and pinned to the top of the standard floor deck. The objective is to ensure that any small movements which may occur between adjacent manufactured floor panels do not transfer through to the floor covering, and cause either cracking of hard tiles or stone floor finishes, or movement lines to "print through" into vinyl or thin carpets.

If the floor covering is to comprise ceramic tiles or stone, or vinyl or linoleum, or thin carpet, it is virtually standard practice to "overboard" or "counter-board" a panelled floor deck, as this process is referred to. If the floor finish is to be hardwood or hardwood laminate, a non-structural overlay of hardwood or laminate, typically 8-20 mm thickness, can be glued and or pinned to the top of the standard panel floor deck, in which case this overlay is used instead of the plywood overlay that would be used if the floor finish was tiles, stone, vinyl or thin carpet. Even when the floor covering is to be thick carpet plus underlay, over-boarding is often specified in order to ensure that any small movements that might occur between adjacent floor panels do not manifest as "squeaks".

### 2. Underfloor Heating in Timber Floors

Warm water underfloor heating is an increasingly popular way of heating British buildings and a variety of different ways have been developed for incorporating this form of heating into timber floor constructions. The most commonly-used ways are described and illustrated below. All of these rely on incorporating plastic pipe into the floor structure, through which warm water is then circulated. The heat from the water in the pipe transfers through the structure to the top surface of the floor deck, from which heat radiates into the room space above the floor deck.

Not all of these different forms of underfloor heating are equally efficient however. With some, the average water temperature required in order to achieve a certain heating power is much higher than needed by others. This issue is increasingly important now that it is appreciated that the lower the water temperature needed in order to produce the required heating power output, the more efficient will be the heating system. For example, if the heated water is being produced by a heat pump, every 1° C reduction in water temperature increases the Coefficient of Performance (CoP) of the heat pump by 2.5%. Consequently, a 10° C reduction improves the CoP by a huge 25%. [The CoP is the measure of the ratio between the total heat output from a heat pump and each unit of electrical power input. A heat pump providing 4kW total output for 1kW of electrical input is said to have a CoP of 4.0].

From this it can be seen that, if the chosen method of incorporating underfloor heating into the floor can provide the required heating power output using water even 5° C cooler than an alternative method, its ability to utilise cooler water becomes significant. Such a reduction can materially reduce the energy required to power a heating system, and the carbon emissions associated with heating a building.

There are four basic ways in which warm water underfloor heating can be incorporated into a timber floor. These are described and illustrated below as Methods A, B, C and D. The objective of each one is to transfer heat energy from the pipe to the top surface of either the floor deck or its floor covering, using a combination of conduction, convection and radiation.

Method A, which is illustrated in Diagram D, sets the heating pipe into diffuser plates that are in contact with the underside of the floor deck. These conduct heat energy from the pipe and transfer it to the underside of the floor deck. The diffuser plates are frequently fabricated from aluminium but can also be made from galvanised steel or copper.

Sometimes, in a joisted floor, the plates are nailed to the underside of the floor deck but other systems nail them to the tops of the joists. The effectiveness of the plates depends on the degree of contact between the top of the diffuser plate and the underside of the timber floor deck. If there is any air-gap between the two, efficiency is reduced considerably because air is such a poor conductor. Sometimes, differential thermal expansion between the plate and the floor deck can cause the plate to spring away from contact, or they can sag over time due to the weight of the pipe and the water within it, and lose contact.

In a fully-floating floor, the plates are usually set into channels cut in the top of the rigid supporting insulation. This method can work well because the diffuser plate is then sandwiched between the top of the insulation and the underside of the floor deck. Good mechanical contact is maintained between plate and floor deck by the self-weight of the floor deck and furniture pressing down.

Occasionally, there is sufficient thermal expansion of the diffuser plate to cause movement between plate and floor deck, manifested by "ticking" sounds being heard particularly during warm up and cool down. Using diffuser plates suffers the consequence of aluminium being a relatively expensive material. Using thicker galvanised steel instead reduces the cost of diffuser plates only slightly. When used in joisted or battened floors, it is also absolutely essential that insulation is packed around the underside of the diffuser plates when they are installed, to ensure there is no risk of cold air coming into contact with the underside of the plates and robbing them of heat.

Method B, which is illustrated in Diagram E, sets the heating pipe into a pug - a stiff damp mix of weak sand and cement - which when it has dried thoroughly becomes an inexpensive heat diffuser that conducts heat away from the pipe and transfers it to the underside of the floor deck. In a joisted floor, a layer of rigid insulation can be set between the joists in such a way that its top surface is below the level of the top of the joists. The heating pipe is set into this void, which is then filled with pug that is levelled to the joist tops.

While the pug is less expensive than aluminium or steel diffusers, and it can isolate the pipe from cold draughts, this method is not without problems. Firstly, the pug must be allowed to become absolutely dry before the timber floor deck is installed because otherwise any residual moisture in the pug can be absorbed by the underside of the timber, causing it to swell and the timber to "cup", and become distorted or split. Frequently, pressure of time on a building site does not allow sufficient time for this drying process. Secondly, the pug is generally formed using a weak sand/cement mix and it is relatively thin. This makes it prone to cracking, particularly over the long installed-life of the underfloor heating. If cracking does occur, then heat is only conducted from the pipe to the first crack, and the consequence is that heating performance can gradually deteriorate. The problem can be reduced by adding plasticizer to the pug mix but this is not an entirely satisfactory solution.

Method C, which is illustrated in Diagram F, suspends the heating pipe within an air space created below the floor deck and relies on heat being transferred between the pipe and the floor deck by a combination of conduction and convection. While cheap - because it avoids the expense of a diffuser - and dry - avoiding the need to wait for a pug to dry out - such systems are relatively inefficient because air is a poor conductor. Generally, much higher water temperatures are required to achieve a specific heat output power. The performance of such systems can be improved if the air space is created using reflective material which can then reflect radiation from the pipe back to the underside of the floor deck, but the improvement still leaves this method performing poorly by comparison with other methods.

Method D, which is illustrated in Diagram G, has the heating pipe incorporated within the thickness of the floor deck itself. This method provides the most effective transfer of energy between the pipe and the floor deck because the pipe is in intimate contact with the floor deck and this high degree of mechanical contact does not diminish throughout the installed life of the underfloor heating. Diffuser plates and their associated expense and "ticking" problems are avoided, there are no wet trades and the efficiency of thermal transfer is as high as possible.

Method D was the basis of the invention described in British Patent Specification No. 2 271 174 in which heating pipe is pressed into serpentine channels which have been machined into the underside of a manufactured floor panel. The practical manifestation of this panel has pipe factory-fitted, with aluminium foil stuck to the underside of the panel and pressed into contact with the heating pipe, in such a way that the foil becomes a partial fin to the otherwise exposed pipe, in order to conduct to the structure of the panel heat energy from the half-circumference of the pipe that is not in contact with the bottom of the channel, thereby improving the collection and transfer of energy between pipe and floor panel. Floor decks can then be laid using a combination of standard un-piped floor panels and piped floor panels, and this enables underfloor heating to be incorporated into a room as the floor deck is installed. The high efficiency of this panel is maintained throughout its installed life. However, in practical use, the panel described above has disadvantages which are described below and which the present Invention addresses.

In order to understand how the present invention improves on the shortcomings of the panels of British Patent Specification No. 2 271 174, it is necessary to consider in some detail how the panels are manufactured and then subsequently installed in a building.
1. Manufactured UK floor panels are typically 2400 mm x 600 mm x 22 mm and are typically formed from particle board or plywood as defined in BS EN312.
2. A standard floor panel is machined on its underside to create a serpentine channel. A continuous length of plastic pipe is then pressed into this pipe channel, leaving the pipe ends emerging from either one end of the panel or the other. The gap between the pipe and the panel can be filled in with thermally-conductive material. Alternatively, the underside of the panel can be covered with self-adhesive aluminium foil which is then pressed down against the pipe, to create a partial fin on the pipe to conduct energy from that half of the pipe section into the panel, increasing the effectiveness of the heat transfer.
3. For specialised applications, larger standard panels - typically 3000 mm x 1200 mm x 22 mm or 3600 mm x 1200 mm x 22 mm - can be used but these are then too heavy and unwieldy to be handled on site by a single person.
4. The resulting panel becomes a factory-produced heating module - a heated form of the standard manufactured floor panel - but the dimensions of the heating module that has been created are determined by the size of the standard manufactured panel that has been used as its basis. A standard panel 2400 mm x 600 mm can be cut in half and then machined and fitted with pipe, to create a half-size floor heating module. Similarly, a full size 2400 mm x 600 mm panel can be cut down to 1800 mm x 600 mm, and then machined and piped, in order to create a three-quarter-size panel. These can then be used in combination with full-size modules in order to heat a space.
5. When used in combination, the panels are linked to the same common Flow and common Reverse Return. It is essential that the hydraulic resistance of each combination is the same, otherwise water will short-circuit around that combination which has the lowest resistance.
6. While these various different-size modules can be used together, they must all be interconnected using appropriate pipe fittings. Most combinations are linked in parallel to a common Flow and common Reverse Return. The most frequently-used fitting is a Branch Reduced Tee which involves three pipe connections - in, out and branch. Since each panel requires two fittings, this generally involves up to six individual joints being used to connect each module. While the fittings and connections are generally reliable, the large number that are used to heat even a single room represent a concern and the fittings represent potential points of failure or leaks.
7. Also, when a carpenter installs plain, unheated, standard flooring panels, it is customary to install them in such a way that adjacent rows overlap. This overlapping arrangement is generally referred to as "brick-bonding" and it creates a stronger floor deck because loads imposed on one panel are shared by adjacent panels. When using heated modules that have been created from the same standard panels, both pipe tails are generally arranged to emerge from the same end of the panel. In order that adjacent panels can be linked in parallel, the piped ends of adjacent rows of panels must all be arranged to finish on the centreline of the same joist, and brick-bonding is not possible.

In summary, while Method D, which has pipe integrated within the thickness of the floor deck, is the most efficient in terms of heat transfer, fitting pipe into a channel formed in the underside of a standard floor panel has the following disadvantages.
- The maximum size of a single heating module is limited to the size of the standard floor panel from which it has been created,
- Individual heating modules must be interconnected using pipe fittings, involving 2-6 separate joints per module,
- Smaller panels can be created but these further increase the number of fittings required per unit area of floor deck,
- The number of pipe fittings required to link together all the heating modules in the floor of even a single room is considerable and this is a concern to specifiers, installers and building owners,
- Normal carpentry brick-bonding of floor panels is not possible,
- The machining of the pipe channels in the underside does reduce the overall strength of the panel and this reduces the maximum span across which the panel can be used, by comparison with standard unheated floor panels.

When designing a new method for incorporating underfloor heating into a timber floor, it can be seen from above that it is no longer sufficient that the method or product used should simply produce the required thermal power output but that it should do so using water temperature which is as cool as possible, and the present invention is directed towards achieving this objective. At the same time, it is also important that the new product should be simple and quick to use on site, so that it can be easily installed without the need for specialist site labour.

### Summary of the Invention

According to a first aspect of the present invention there is provided an underfloor heating panel having an upper surface formed with channels to receive pipes, some at least of the channels having end portions that are wider or deeper than the main portions of the channels.

Some at least of the channels preferably have end portions that are both wider and deeper than the main portions of the channels.

According to a second aspect of the present invention there is provided a method of installing an underfloor heating system that includes the use of heating panels as defined above.

The method of the present Invention preferably harnesses the high-efficiency Method D that has been illustrated previously in Diagram G.

The heating panel of the present invention may be a standard manufactured floor panel as illustrated in Diagram H which has machined into its upper surface a pattern of pipe channels. Once the panel shown in Diagram H has been installed on site as part of a floor deck, lengths of heating pipe can be pressed into the channels in a variety of different configurations.

The panel of the present invention can be used in association with standard un-machined panels when creating a floor deck but a complete floor deck can be formed using only panels as defined above. The panel of the present invention can be installed in a brick-bonding arrangement and it may be glued, nailed or screwed to the top of any supporting joist or batten in just the same way as would normally be used by a carpenter to install standard manufactured floor panels.

Once the floor deck has been installed, a pipe length may be pressed into the channels machined in the top surfaces of the panels. These pipe lengths may be arranged to form either a complete series heating circuit or individual heating modules, according to the size of the space which is being heated. Whenever individual heating modules are created, these can be connected in parallel to a common flow and common reverse return.

Further features of the invention will be apparent from the following detailed description and comments:-
- Heating modules can be created, each involving several full length and shortened panels of the present invention, and this greatly reduces the number of fittings required
- Individual heating modules can be interconnected in parallel using pipe fittings, where this is advantageous, but modules may alternatively be connected in a single series circuit where appropriate, eliminating the need for additional fittings altogether
- Shorter panels can be created by reducing the length of full size panels in a very similar same way to that which a carpenter uses to create shorter standard unheated floor panels and such shorter panels do not increase the number of fittings required per unit area of floor deck
- The number of pipe fittings required in order to link together all the heating modules used to heat a room can be kept to a minimum.
- Normal carpentry brick-bonding of floor panels is possible.
- The process of "over-boarding" or "counter-boarding" with 4 mm or 6 mm plywood automatically restores the original strength of the plain unheated panel so that a heated panel can be used across the same joist and batten spans.
- If either particularly high floor loading strength is required or if it is a requirement to further reduce the water temperature to as low as possible, then the "over-boarding" or "counter-boarding" may use stronger and more-conductive metal sheets instead of plywood.

### Brief Description of the Drawings

Diagrams A to C show floor constructions,
Diagram D shows a diffuser plate,
Diagram E shows a heating system including the use of a pug,
Diagram F shows a heated air system,
Diagram G shows a timber deck having an integral heating system,
Diagram H shows standard timber floor panels,
Diagram I shows a floor panel in accordance with the present invention,
Diagrams J and K show further details of the floor panel in accordance with the present invention,
Diagram L illustrates the possible creation of different sizes of panels,
Diagrams M and N show flow circuits obtained by the use of the heating panels of the present invention, and
Diagram O shows a flow circuit obtained using prior art heating panels.

### Description of the Preferred Embodiments

Diagram H illustrates the type of manufactured floor panel that is used to form the panel 10 of the present Invention. Typically, this would be chipboard or plywood but could be oriented-strand board (OSB). Such panels can have plain edges but most chipboard and OSB panels have tongued and grooved edges and ends. Diagram I illustrates a typical arrangement of pipe channels 11 machined into the top surface of a standard manufactured panel.

Diagram J illustrates the detail of each pipe channel 11 as it emerges at the end of a panel, and shows how the end of the machined pipe channel is widened as it approaches the end of the panel while at the same time becoming deeper. The purpose of the widening is to accommodate any small misalignment or variation in production tolerance occurring where the pipe channels of two panels of the present invention are laid end to end.

The purpose of the deepening is to allow the pipe 12 to be brought down to the level of the top of a supporting joist or batten. The pipe 12 can then travel across the top of the joist or batten without either needing to be notched. If the joist is a manufactured timber I-beam, it must not be notched anyway.

Diagram K illustrates how a pipe 12 is carried across the top of a supporting joist or batten 13 without requiring the joist or batten 13 to be notched, and also how the underside of the plain board used to cover over the flow/return pipe work and fittings is locally machined on site to accommodate the pipe tail. In practice, once the carpenter has cut the plain cover panel to size, it can be offered up to its fitting and its edge marked to indicate where pipe ends emerge and cross the joist/batten. It can the be turned over, and the carpenter may then use his circular saw - set to a cut depth of slightly greater than the pipe diameter - to cut short relieving channels into the underside of the cover panel edge, of a width just greater than the pipe diameter. With these channels cut, the cover panel should fit over the pipe ends, and complete the floor deck.

In a typical arrangement, the panels 10 will have a depth of 22 mm. and the pipes 12 will have a diameter of 10 mm. For the majority of their length, the channels 11 will have a depth and a width of 10 mm. so that the pipes 12 are close fits in the channels 11. At the ends of the channels 11, their widths are progressively increased so that they have a maximum width of, for example, 20 mm. The maximum width of each channel 11 may be chosen so that it is at least 50% greater than the width of the main portion of the channel 11, but can be twice the width.

The maximum depth of each channel 11 at the end portions thereof, again for receiving a pipe 12 having a diameter of 10 mm. may be 15 or 16 mm. but is typically at least 50% greater than the depth of the main portion of the channel 11.

Diagram L illustrates how sections from the centre of a panel of the present invention can be removed in order to create shorter panels needed in one room and how these removed sections can then be reused in another room with different dimensions by being inserted into the centre of a another panel in order to create longer panels.

Diagram M illustrates how panels 10 of the present Invention may be piped to create a single series pipe circuit used to heat a small room. Diagram N illustrates how panels of the present invention may be used to create individual large heating modules which can then be used together to heat a larger space, and linked in parallel to a common flow and a common reverse return.

The arrangement shown in Diagram N should be compared with that shown in Diagram O, which shows the pipe fittings and connections required for the installation of a prior art underfloor heating installations. The simplified and more cost-effective arrangement shown in Diagram N should be immediately apparent.
1. The preferred embodiment of panel is illustrated in Diagram I which shows four strands of pipe but six or more strands would be used if higher thermal power output is required, or if cold water would be circulated through the pipe during periods of hot weather in order to create a floor-cooling system.
2. Panels machined with an odd number of channels can be created if it is a requirement that pipe ends should emerge at opposite ends of a line of panels of the present invention.
3. Panels with an even number of pipe channels can be created where it is useful to have the pipe ends emerge at the same end of a line of panels of the present invention.
4. Larger format manufactured timber panels may also be machined to become the basis for larger heating/cooling panels.

It has been learnt that introducing heating pipe within the structure of a manufactured floor panel has the effect of automatically bringing the pipe into good mechanical contact with the end grains of the fibres or particles or veneers from which the panel has been made. This is important because timber is one of the very few non-isotropic materials. It conducts heat energy along the length of its fibres at up to three-times the rate it conducts heat energy across its fibres and this increases considerably the efficiency of a heating module formed from a manufactured timber floor panel.

Prior art inventions which set heating pipe into natural timber planks cannot harness this benefit because the pipe is invariably inserted in parallel with the fibres and the heat must consequently transfer away from the pipe across the fibres.

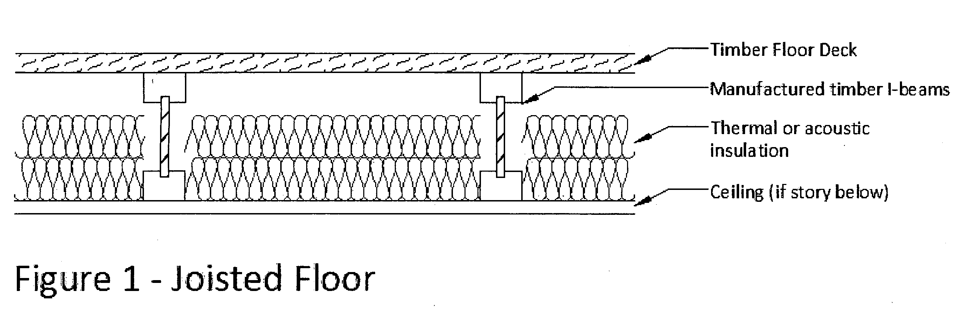

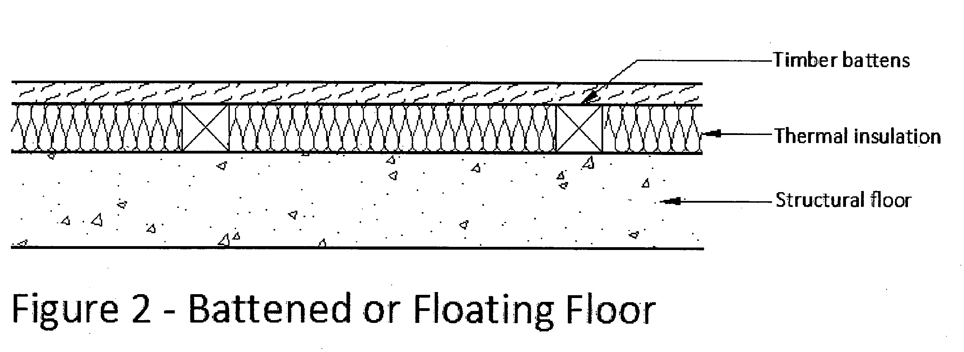

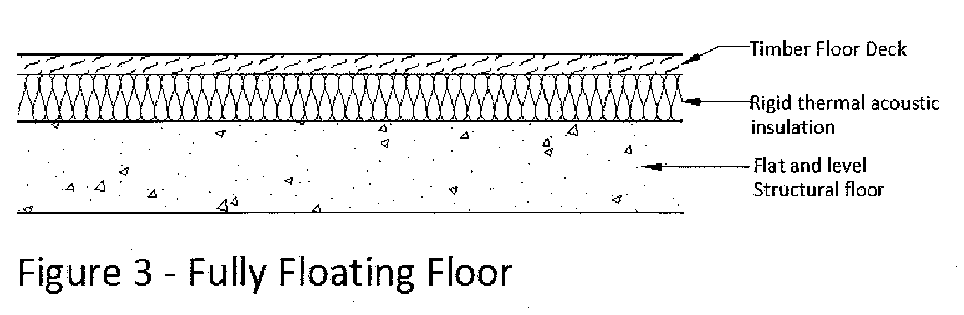

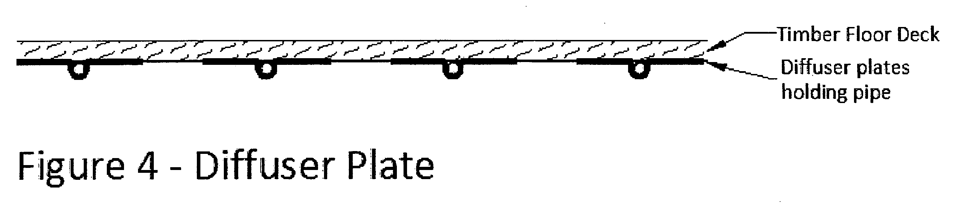

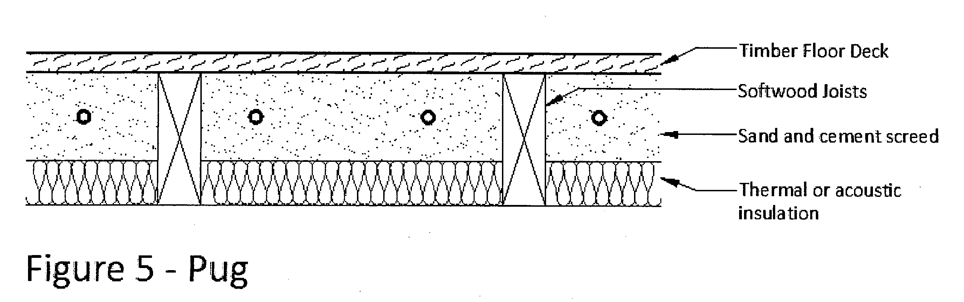

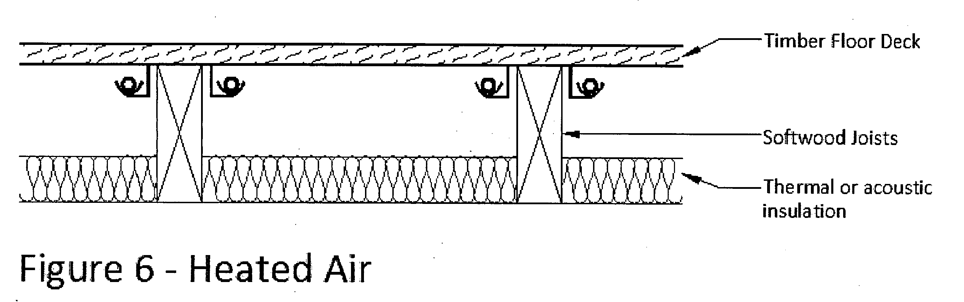

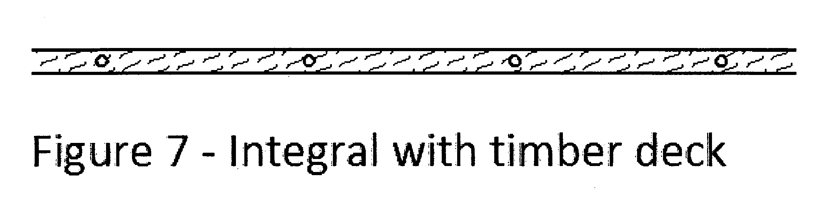

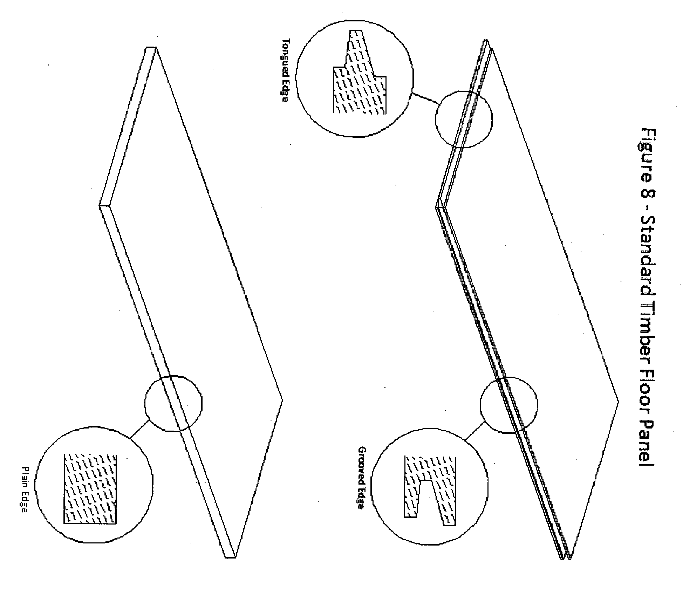

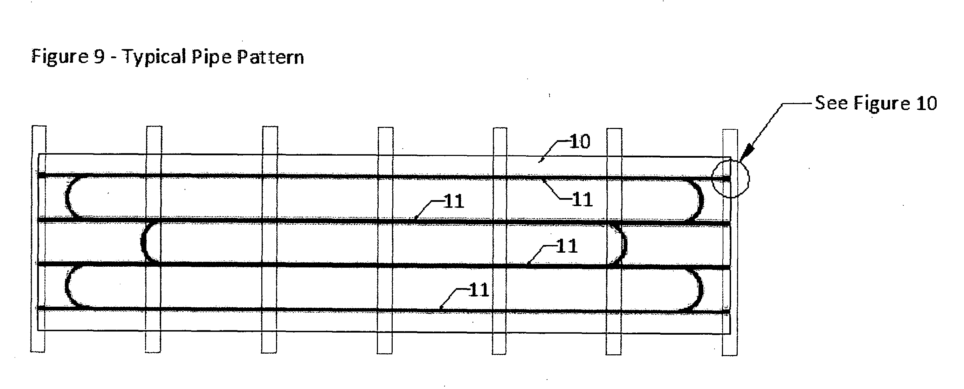

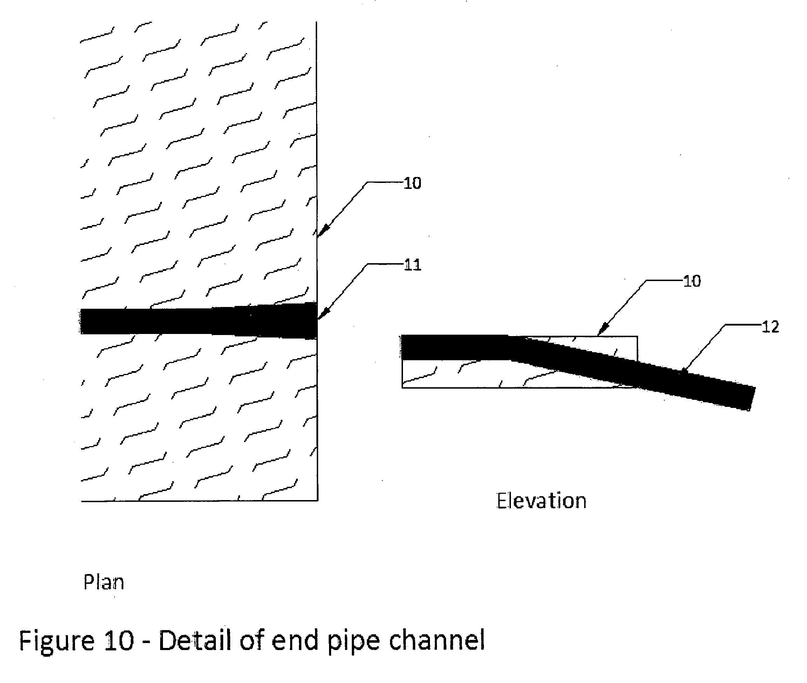

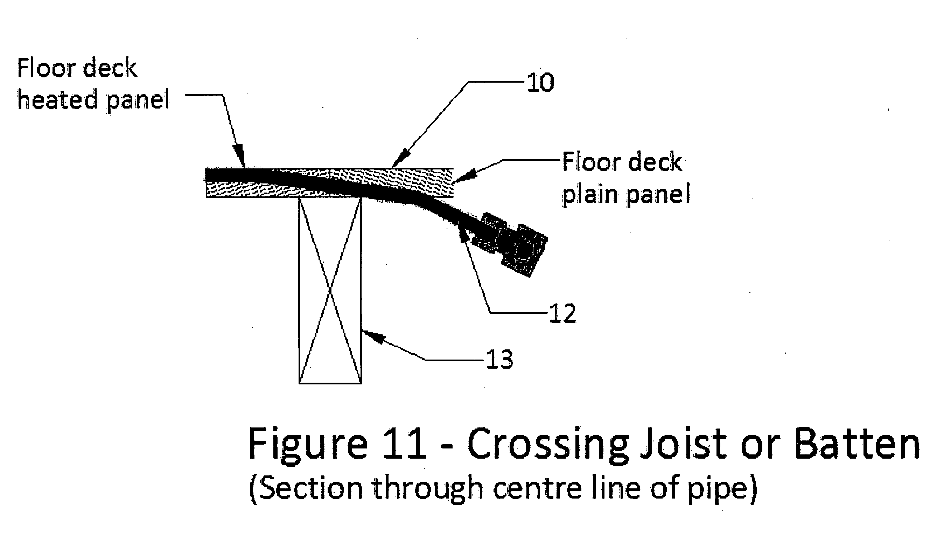

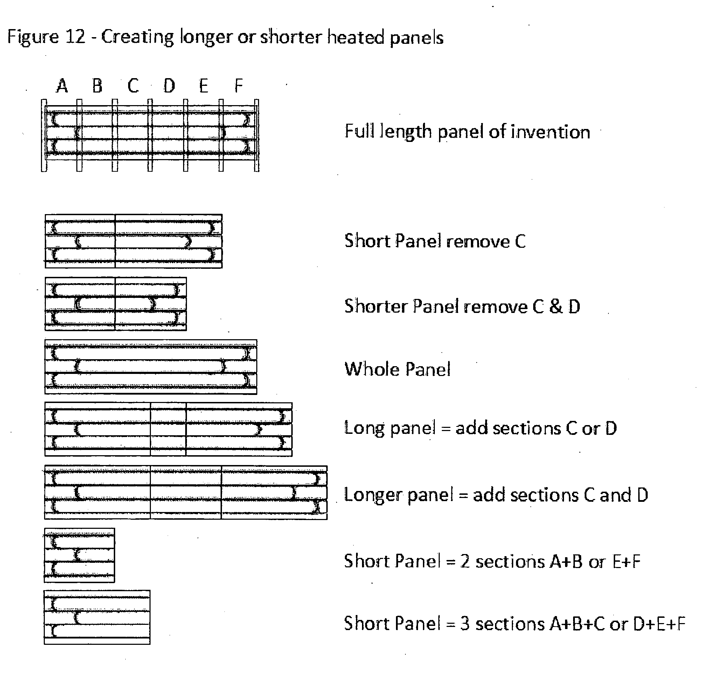

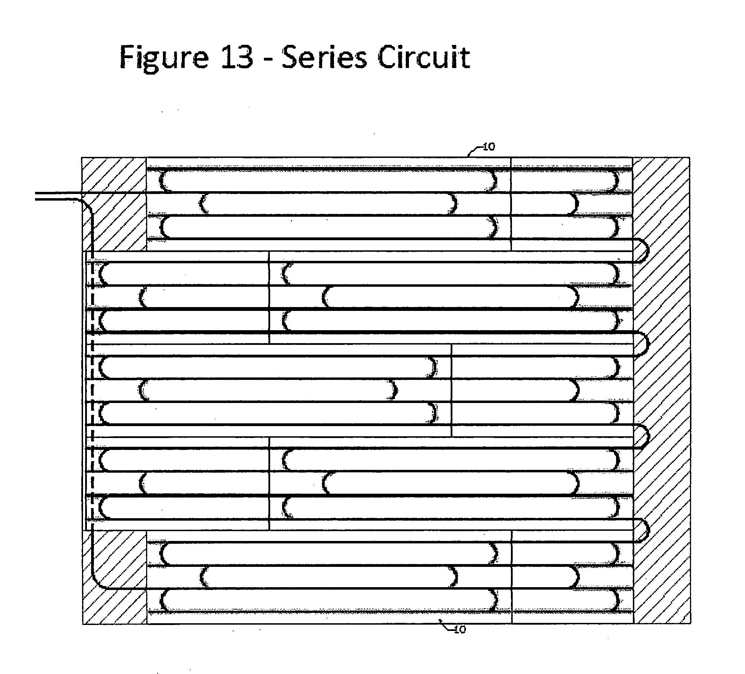

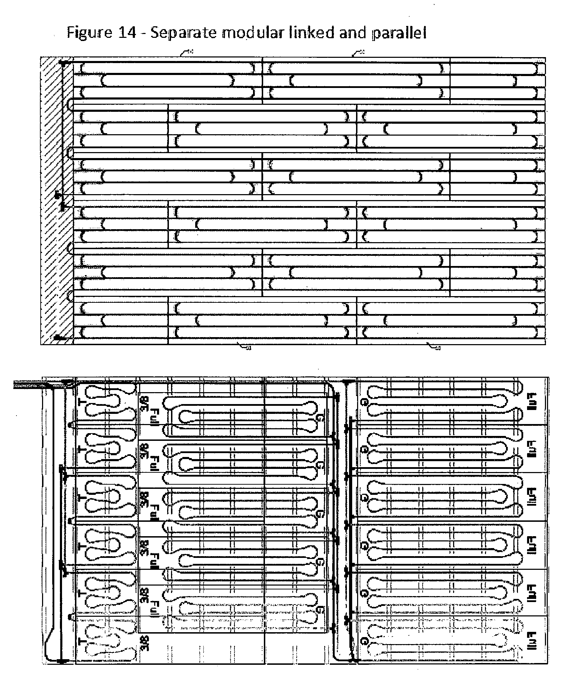

## Claims

1. An underfloor heating panel having an upper surface formed with channels to receive pipes, some at least of the channels having end portions that are wider or deeper than the main portions of the channels.

2. An underfloor heating panel as claimed in Claim 1, in which some at least of the channels have end portions that are both wider and deeper than the main portions of the channels.

3. An underfloor heating panel as claimed in Claim 1, in which all of the channels have end portions that are both wider and deeper than the main portions of the channels.

4. An underfloor heating panel as claimed in Claim 1, in which the end portions of the channels are at least 50% wider than the main portions of the channels.

5. An underfloor heating panel as claimed in Claim 4, in which the end portions of the channels are at least 50% deeper than the main portions of the channels.

6. A method of installing an underfloor heating system that includes the use of heating panels as claimed in any one of the preceding claims.
